# FASCICULE DE BREVET EUROPEEN

(11) **EP 1 844 375 B1**
(45) Date de publication et mention de la délivrance du brevet: **08.09.2010**
(21) Numéro de dépôt: 06709170.2
(22) Date de dépôt: 26.01.2006
(51) Int. Cl.: G05D 1/06

(54) **PROCEDE ET DISPOSITF POUR CONSTRUIRE UNE TRAJECTOIRE DE VOL A BASSE ALTITUDE DESTINEE A ETRE SUIVIE PAR UN AERONEF**
VERFAHREN UND EINRICHTUNG ZUM KONSTRUIEREN EINER VON EINEM FLUGZEUG ZU BEFOLGENDEN FLUGBAHN NIEDRIGER HÖHE
METHOD AND DEVICE FOR CONSTRUCTING A LOW-ALTITUDE FLIGHT PATH TO BE FOLLOWED BY AN AIRCRAFT

(30) Priorité: 31.01.2005 FR 0500938
(43) Date de publication de la demande: 17.10.2007
(73) Titulaire: Airbus SAS, 31700 Blagnac (FR)
(72) Inventeur: ARTINI, Franck, F-31000 Toulouse (FR)
(74) Mandataire: Hauer, Bernard
(86) Numéro de dépôt international: PCT/FR2006/000172
(87) Numéro de publication internationale: WO 2006/079718

(56) Documents cités:
- EP-A- 0 775 953
- WO-A-2005/069094

## Description

La présente invention concerne un procédé et un dispositif pour construire une trajectoire de vol à basse altitude destinée à être suivie par un aéronef.

Dans le cadre de la présente invention, on entend par trajectoire de vol à basse altitude une trajectoire de vol permettant à un aéronef de suivre au plus près le terrain survolé, tout en évitant tout risque de collision avec une partie du terrain. Une telle trajectoire est donc située à une hauteur de terrain minimale prédéterminée, par exemple 500 pieds (environ 150 mètres).

Plus particulièrement, bien que non exclusivement, la présente invention s'applique à un avion de transport militaire tactique qui présente un faible rapport poussée/poids et une forte inertie, et dont les temps de manoeuvre sont relativement lents notamment par rapport à ceux d'un avion plus léger et très véloce, tel qu'un avion de combat par exemple. De plus, pour un tel avion de transport militaire, il est en général souhaitable que ledit avion ne soit pas facilement détectable.

On sait que le calcul d'une trajectoire de vol à basse altitude du type précité requiert des ressources de calcul très importantes pour les calculateurs embarqués qui sont utilisés à cet effet.

Or, l'équipage d'un aéronef, en particulier d'un avion de transport militaire du type précité, peut avoir besoin de disposer d'une trajectoire de vol à basse altitude, de façon quasi immédiate, dans certaines situations de vol opérationnelles, telles qu'une descente vers le sol en cas de menace imprévue pour bénéficier d'un masquage par le terrain ou lors de l'apparition de conditions IMC ("Instrument Meteorological Conditions" en anglais, à savoir conditions de vol aux instruments) non prévues en vol à basse altitude en conditions VMC ("Visual Meteorological Conditions" en anglais, à savoir conditions de vol à vue) requérant un guidage automati-que.

Comme les ressources de calcul sont bien entendu limitées sur un aéronef, il est généralement impossible de construire une trajectoire de vol longue à basse altitude dans un délai très court, de l'ordre de quelques secondes, comme cela est requis dans des situations de vol opérationnelles telles que celles précitées.

Cet inconvénient est accru pour des avions de transport militaires tactiques tels que décrits précédemment, dont l'inertie élevée rend nécessaire le calcul des trajectoires de vol à basse altitude, à l'aide de modèles de performances embarqués (performances de montée de l'avion notamment). Un tel mode de calcul utilisant des modèles de performances allonge considérablement les temps de calcul, en particulier par rapport à ceux destinés à un avion de combat par exemple, dont le rapport poussée/poids élevé rend moins critique l'impact des performances de montée.

Par ailleurs, par le document EP-0 775 953, on connaît un procédé de pilotage d'un aéronef en vol à basse altitude. Ce procédé repose sur la détermination d'une trajectoire de vol comprenant une trajectoire latérale et une trajectoire verticale. La trajectoire verticale est déterminée à l'aide d'un profil de terrain relatif à un terrain à survoler par l'aéronef de manière à permettre audit aéronef de suivre ledit terrain survolé. Selon ce procédé, on détermine la trajectoire verticale, lors d'un vol de l'aéronef, de façon successive au fur et à mesure du vol, et ceci tronçon par tronçon, et pour chaque tronçon de trajectoire verticale, on extrait d'une base de données du terrain contenant le profil de terrain, une section de profil qui est relative au terrain à survoler selon la trajectoire latérale correspondante, et on détermine ledit tronçon de trajectoire verticale, à l'aide de ladite section de profil ainsi extraite, en fonction de performances de montée et de descente de l'aéronef.

La présente invention a pour objet de remédier aux inconvénients précités. Elle concerne un procédé pour construire, de façon particulièrement rapide et précise, une trajectoire de vol à basse altitude destinée à être suivie par un aéronef, en particulier un avion de transport militaire, ladite trajectoire de vol comprenant une trajectoire latérale et une trajectoire verticale et étant construite à l'aide d'un profil de terrain (issu d'une base de données du terrain) relatif à un terrain à survoler par l'aéronef de manière à permettre audit aéronef de suivre (au plus près) ledit terrain survolé.

Selon l'invention, ledit procédé selon lequel on détermine ladite trajectoire verticale de la trajectoire de vol, lors d'un vol de l'aéronef, de façon successive au fur et à mesure du vol, et ceci tronçon par tronçon, et pour chaque tronçon de trajectoire verticale :
- à l'aide d'un premier élément, on extrait d'une base de données du terrain contenant ledit profil de terrain une section de profil qui est relative au terrain à survoler selon la trajectoire latérale correspondante ; et
- à l'aide d'un deuxième élément, on détermine ledit tronçon de trajectoire verticale, à l'aide de ladite section de profil ainsi extraite, en fonction de performances de montée et de descente de l'aéronef,
   est remarquable en ce que l'on vérifie si chaque section de profil extraite de ladite base de données par ledit premier élément est compatible avec des performances courantes de montée maximale de l'aéronef, et lorsque l'on détecte une incompatibilité, on corrige la section de profil correspondante pour lever cette incompatibilité, la section de profil ainsi corrigée étant utilisée par ledit deuxième élément pour déterminer le tronçon de trajectoire verticale correspondant, et en ce que, pour vérifier si chaque section de profil extraite de la base de données est compatible avec des performances courantes de montée maximale de l'aéronef :
   - on utilise une courbe de garde qui est représentative des performances courantes de montée maximale de l'aéronef, ladite courbe de garde consistant en un segment de montée qui prend appui sur le profil de terrain considéré ;
   - on balaie ladite courbe de garde sur le profil de terrain pour chaque tronçon de trajectoire verticale, le balayage commençant au début de la première section de profil ; et
   - on vérifie, au cours de ce balayage, si ladite courbe de garde intercepte le profil de terrain,
      et en ce qu'à une durée prédéterminée, après une demande de construction d'une trajectoire de vol, qui est compatible avec le besoin opérationnel et les configurations du relief que l'on doit rencontrer sur la trajectoire de vol, on fournit un premier tronçon de trajectoire verticale, pendant que l'on détermine un second tronçon, et ainsi de suite.

Ainsi, grâce à la présente invention, on détermine la trajectoire verticale de la trajectoire de vol, non pas entièrement en une seule fois avant de l'utiliser ultérieurement lors d'un vol, mais on la détermine tronçon par tronçon au cours du vol, ce qui permet de disposer très rapidement du ou des premiers tronçons qui peuvent alors être suivis par l'aéronef, pendant que l'on détermine les tronçons suivants. Ce mode de calcul pas à pas est mis en oeuvre, non seulement pour la détermination des tronçons de trajectoire verticale, mais également pour l'extraction du profil de terrain (sous forme de sections de profil), une telle extraction nécessitant également de façon usuelle des ressources de calcul très importantes.

Par conséquent, la présente invention tient compte du fait que si une trajectoire de vol doit être calculée sur une longue distance, il n'est pas nécessaire de disposer immédiatement de la trajectoire complète au début du vol, mais uniquement d'une certaine longueur qui est susceptible d'être suivie immédiatement par l'aéronef, et qui permet d'obtenir un temps de réponse adapté et un niveau de sécurité et d'anticipation minimal.

De plus, on est en mesure, dans la plupart des cas opérationnels, d'anticiper toute configuration de terrain critique qui pourrait être rencontrée à la fin du calcul de chaque tronçon de trajectoire. Plus précisément, on dispose, avant la détermination de chaque tronçon, d'une information concernant la possibilité de voler sur le tronçon suivant en fonction de la section de profil correspondante, et dans le cas où il est nécessaire d'anticiper une montée, cette situation est prise en compte par la section de profil corrigée.

La présente invention est particulièrement bien adaptée au type de trajectoire suivant :
- la trajectoire verticale est constituée de segments à pente constante volés à une vitesse de consigne donnée ;
- la pente de chaque segment de montée ou de descente est bornée par les performances maximales de montée ou de descente de l'aéronef, déterminées à partir d'un modèle de performances embarqué ;
- la pente de chaque segment est ensuite optimisée en fonction du profil de terrain ; et
- le calcul est fait de sorte que la trajectoire est la trajectoire la plus basse permettant de franchir la crête la plus haute sur le tronçon considéré.

De façon avantageuse, pour déterminer ladite trajectoire verticale, on détermine de plus une trajectoire de transition, à chaque fois entre deux tronçons de trajectoire verticale successifs, ladite trajectoire de transition permettant de voler d'un tronçon vers l'autre tronçon. On détermine de préférence ladite trajectoire de transition, en prolongeant le tronçon, qui est situé le plus haut à un plan de transition des deux tronçons de trajectoire verticale successifs, vers l'autre tronçon, et ceci jusqu'à la jonction.

Par ailleurs, avantageusement, ladite trajectoire latérale est :
- soit conforme à un plan de vol fourni par un pilote de l'aéronef ;
- soit déterminée (automatiquement) par un autorouteur de l'aéronef.

La présente invention concerne également un dispositif pour construire de façon particulièrement rapide et précise une trajectoire de vol à basse altitude destinée à être suivie par un aéronef, en particulier un avion de transport militaire, ladite trajectoire de vol comprenant une trajectoire latérale et une trajectoire verticale.

Selon l'invention, ledit dispositif du type comportant :
- une base de données contenant un profil de terrain relatif à un terrain à survoler par l'aéronef ;
- un ensemble de sources d'informations, susceptibles d'engendrer au moins des informations relatives à l'aéronef ;
- un premier moyen pour déterminer ladite trajectoire latérale de la trajectoire de vol ; et
- un deuxième moyen pour déterminer ladite trajectoire verticale de la trajectoire de vol, ledit deuxième moyen étant formé de manière à déterminer ladite trajectoire verticale, lors d'un vol de l'aéronef, de façon successive au fur et à mesure du vol, et ceci tronçon par tronçon, ledit deuxième moyen comportant au moins :
   ■ un premier élément pour extraire de ladite base de données, au moins une section de profil qui est relative au terrain à survoler selon la trajectoire latérale correspondante ; et
   ■ un deuxième élément pour déterminer un tronçon de trajectoire verticale, à l'aide de ladite section de profil extraite par ledit premier élément, en fonction de performances de montée et de descente de l'aéronef,
      est remarquable en ce que :
      - ledit deuxième moyen comporte, de plus :
         ■ un quatrième élément pour vérifier si chaque section de profil qui est extraite par ledit premier élément est compatible avec des performances de montée maximale de l'aéronef, ledit quatrième élément comprenant des moyens pour :
            · utiliser une courbe de garde qui est représentative des performances courantes de montée maximale de l'aéronef, ladite courbe de garde consistant en un segment de montée qui prend appui sur le profil de terrain considéré ;
            · balayer ladite courbe de garde sur le profil de terrain pour chaque tronçon de trajectoire verticale, le balayage commençant au début de la première section de profil ; et
            · vérifier, au cours de ce balayage, si ladite courbe de garde intercepte le profil de terrain ; et
         ■ un cinquième élément pour corriger chaque section de profil, pour laquelle une incompatibilité est détectée par ledit quatrième élément, chaque section de profil ainsi corrigée étant utilisée par ledit deuxième élément pour déterminer le tronçon de trajectoire verticale correspondant ; et
      - ledit dispositif est formé de manière à fournir, à une durée prédéterminée après une demande de construction d'une trajectoire de vol, qui est compatible avec le besoin opérationnel et les configurations du relief que l'on doit rencontrer sur la trajectoire de vol, un premier tronçon de trajectoire verticale, pendant qu'il détermine un second tronçon, et ainsi de suite.

Le dispositif conforme à l'invention permet donc d'optimiser les performances de calcul des différents moyens de calcul utilisés lors de la construction d'une trajectoire de vol à basse altitude, et notamment dudit deuxième moyen destiné à déterminer la trajectoire verticale.

Dans un mode de réalisation particulier, ledit deuxième moyen comporte, de plus, un troisième élément pour déterminer une trajectoire de transition entre deux tronçons de trajectoire verticale successifs, ladite trajectoire de transition permettant de voler d'un tronçon vers l'autre tronçon.

Par ailleurs, avantageusement, ledit ensemble de sources d'informations comporte au moins une base de données contenant des informations relatives à des performances de montée et de descente de l'aéronef.
Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 à 6 sont des graphiques permettant d'expliquer la construction conforme à l'invention d'une trajectoire verticale d'une trajectoire de vol à basse altitude.

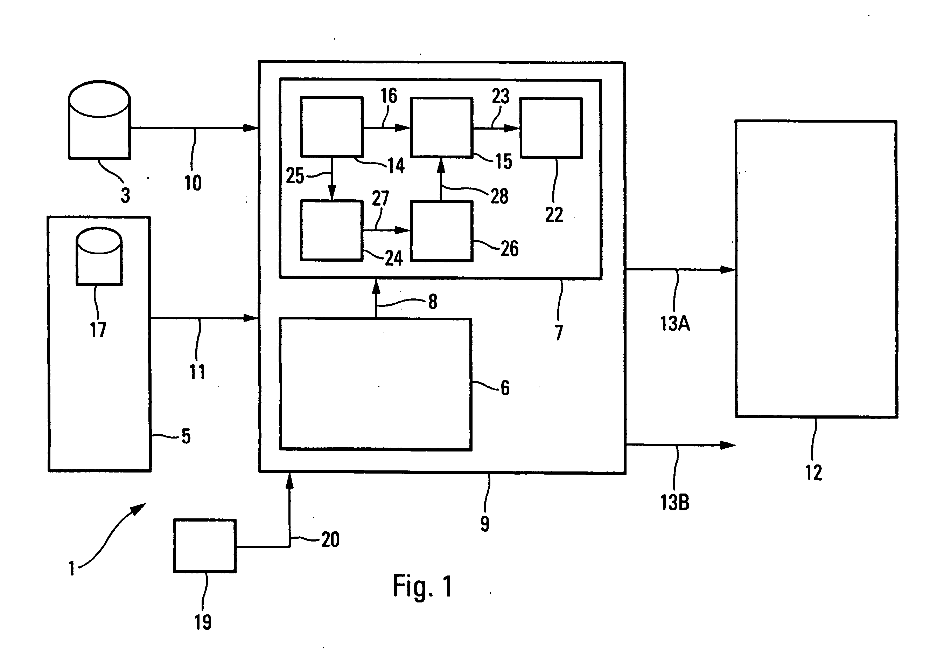

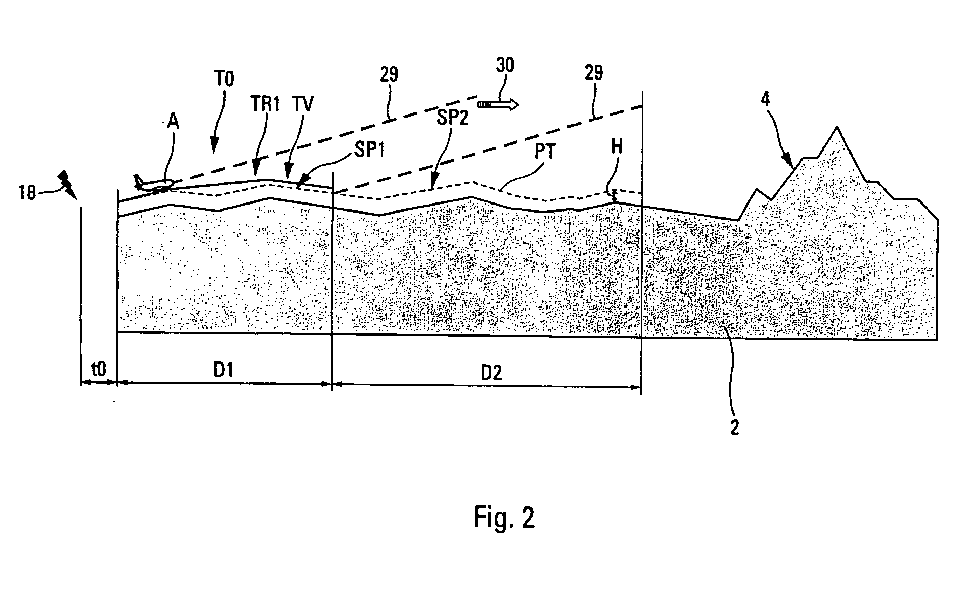

Le dispositif 1 conforme à l'invention et représenté schématiquement sur la figure 1, a pour objet la construction d'une trajectoire de vol T0 à basse altitude destinée à être suivie par un aéronef A, en particulier un avion de transport militaire. Ladite trajectoire de vol T0 comprend une trajectoire latérale TL (non représentée) qui est définie dans un plan horizontal et une trajectoire verticale TV (ou profil de vol) qui est définie dans un plan vertical et représentée sur les figures 2 à 6.

Ladite trajectoire de vol T0 est une trajectoire de vol à basse altitude permettant à l'aéronef A de suivre au plus près le terrain 2 survolé.

Pour ce faire, ledit dispositif 1 qui est embarqué sur l'aéronef A est du type comportant :
- une base de données 3 contenant un profil de terrain PT relatif au terrain 2 à survoler par l'aéronef A, dont le relief 4 est représenté partiellement sur les figures 2 à 6. Dans les exemples représentés sur ces figures 2 à 6, le profil de terrain PT est situé à une hauteur de garde H minimale prédéterminée au-dessus dudit relief 4. Ladite base de données 3 peut être :
   ■ une base de données numériques, chargée avant le vol dans l'aéronef A et contenant ledit profil de terrain PT, ou
   ■ une base de données élaborée en vol par un dispositif tel qu'un radar en mode cartographie par exemple, qui détermine ledit profil de terrain PT à bord de l'aéronef A ;
- un ensemble 5 de sources d'informations, susceptibles d'engendrer des informations relatives à l'aéronef A, précisées ci-dessous ;
- un moyen 6 pour construire ladite trajectoire latérale TL de la trajectoire de vol T0 ; et
- un moyen 7 pour construire ladite trajectoire verticale TV de la trajectoire de vol T0.

Ledit moyen 6 (un moyen d'entrée de données ou un autorouteur par exemple) est tel que ladite trajectoire latérale TL est :
- soit conforme à un plan de vol entré par un pilote de l'aéronef A ;
- soit déterminée (automatiquement) par un autorouteur de l'aéronef A.

Dans un mode de réalisation particulier, représenté sur la figure 1 :
- ledit moyen 6 est relié par une liaison 8 audit moyen 7 ;
- lesdits moyens 6 et 7 sont regroupés dans une unité centrale 9 qui est reliée par des liaisons 10 et 11 respectivement à la base de données 3 et à l'ensemble 5 de sources d'informations ; et
- le dispositif 1 comporte, de plus, un moyen d'affichage 12 qui est relié par une liaison 13A à l'unité centrale 9 et qui est susceptible de présenter à un pilote de l'aéronef A les résultats des traitements mis en oeuvre par ladite unité centrale 9. Ceci permet notamment au pilote de vérifier visuellement si les résultats du calcul de la trajectoire verticale TV ne sont pas absurdes au regard dudit profil de terrain PT. Ces résultats peuvent également être transmis à d'autres dispositifs utilisateurs non représentés, et notamment à un système de guidage usuel de l'aéronef A, par l'intermédiaire d'une liaison 13B.

Selon l'invention, ledit moyen 7 est formé de manière à déterminer ladite trajectoire verticale TV lors d'un vol de l'aéronef A. Plus précisément, il est formé de manière à déterminer ladite trajectoire verticale TV de façon successive au fur et à mesure du vol considéré, et ceci tronçon TRi (de trajectoire verticale TV) par tronçon TRi (de trajectoire verticale TV). A cet effet, ledit moyen 7 comporte au moins :
- un élément 14 pour extraire de ladite base de données 3, au moins une section de profil SPi qui est relative au terrain 2 à survoler selon la trajectoire latérale TL correspondante et qui représente donc une partie dudit profil de terrain PT contenue dans ladite base de données 3 ; et
- un élément 15 qui est relié par une liaison 16 audit élément 14, pour déterminer un tronçon TRi de trajectoire verticale TV, à l'aide de ladite section de profil SPi extraite par ledit élément 14, et ceci en fonction de performances de montée et de descente de l'aéronef A, qui sont issues d'une base de données de performances 17 (faisant partie par exemple dudit ensemble 5 de sources d'informations) et qui sont reçues par l'intermédiaire de ladite liaison 11.

Ainsi, le moyen 7 du dispositif 1 conforme à l'invention détermine la trajectoire verticale TV de la trajectoire de vol T0, non pas entièrement en une seule fois avant de l'utiliser pour un vol, mais tronçon TRi par tronçon TRi au cours du vol (qui utilise cette trajectoire). L'ensemble des différents tronçons TRi ainsi déterminés, i étant un entier variable qui peut être très élevé, forme alors ladite trajectoire verticale TV. Ceci permet au pilote ou à des systèmes de guidage par exemple de disposer très rapidement du ou des premiers tronçons TRi qui peuvent être suivis par l'aéronef A, après une demande (illustrée par un signe 18 sur les figures 2, 3, 5 et 6) d'une construction d'une telle trajectoire de vol T0 à basse altitude, pendant que le dispositif 1 continue à déterminer de façon progressive les tronçons suivants. Le premier tronçon TR1 est disponible à une durée t0, de l'ordre de quelques secondes, après une telle demande de sorte qu'à partir de ce moment l'aéronef A peut commencer à suivre la trajectoire de vol T0 à basse altitude en construction sur le tronçon TR1.

La durée t0 est fixée a priori comme la durée maximale permettant d'avoir une trajectoire de longueur suffisante pour pouvoir s'engager le long de cette trajectoire. Cette longueur de trajectoire ajoutée au bout de la durée t0 dicte les impératifs de puissance de calcul des moyens de trajectographie embarqués.

Ce mode de calcul pas à pas est mis en oeuvre, non seulement pour la détermination des tronçons TRi de trajectoire verticale TV à l'aide du moyen 15, mais également pour l'extraction du profil de terrain PT (sous forme de sections de profil SPi) par le moyen 14, une telle extraction nécessitant de façon usuelle des ressources de calcul très importantes.

Ainsi, le dispositif 1 conforme à l'invention permet de construire de façon particulièrement rapide et précise une trajectoire de vol T0 à basse altitude. Ledit dispositif 1 permet notamment de remédier à l'inconvénient dû à l'existence de ressources de calcul limitées sur un aéronef A. Bien entendu, ces ressources de calcul doivent être suffisantes pour pouvoir fournir un tronçon TR1 de longueur minimale au bout de ladite durée t0

Grâce à l'invention, le pilote et/ou un système de guidage de l'aéronef A peuvent disposer de façon quasi immédiate d'une trajectoire de vol T0 à basse altitude, ce qui est particulièrement avantageux dans certaines situations de vol opérationnelles, telles qu'une descente vers le sol en cas de menace imprévue pour bénéficier d'un masquage par le terrain 2 ou lors de l'apparition de conditions IMC non prévues en vol à basse altitude en conditions VMC requérant un guidage automatique, comme précisé ci-dessus.

La présente invention est également particulièrement avantageuse pour un avion de transport militaire tactique qui présente un faible rapport poussée/poids et une forte inertie, pour lequel le calcul d'une trajectoire de vol T0 à basse altitude requiert des ressources de calcul très importantes, puisqu'il doit utiliser des modèles de performances embarqués (base de données de performances 17).

Le dispositif 1 conforme à l'invention comporte, de plus, un moyen d'activation 19 qui est relié par une liaison 20 à ladite unité centrale 9 et qui permet à un opérateur d'activer (c'est-à-dire de demander) la génération d'une trajectoire de vol T0

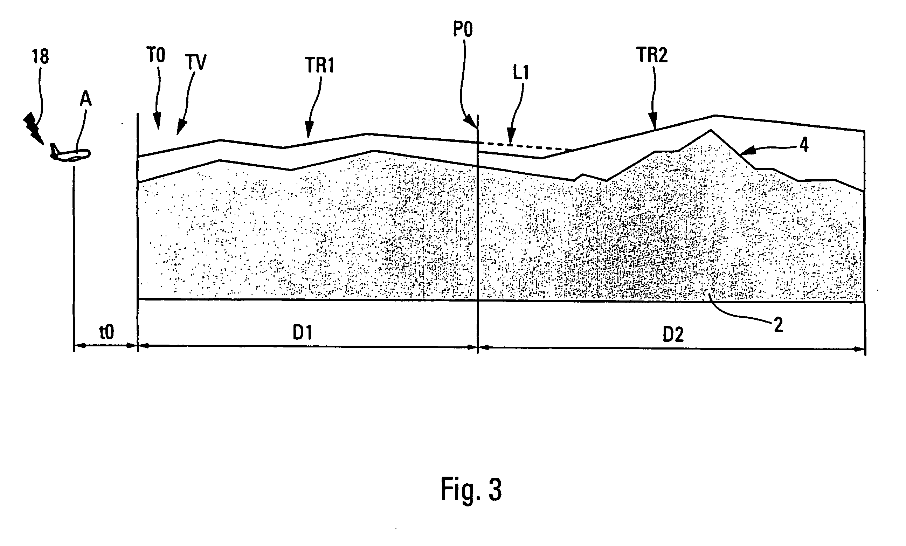

Sur la figure 2, une telle activation est mise en évidence par le signe 18. Une durée t0 après cette activation, le dispositif 1 est en mesure de fournir le premier tronçon TR1 de la trajectoire de vol qui est définie sur une distance horizontale D1. L'aéronef A peut alors voler le long de ce premier tronçon TR1 de trajectoire de vol, pendant que le dispositif 1 conforme à l'invention détermine un second tronçon TR2 qui présente une distance horizontale D2 (figure 3), et ainsi de suite.

On notera que la durée t0 est fixée a priori dans le dispositif embarqué de manière à être compatible avec le besoin opérationnel et les configurations du relief que l'on doit rencontrer sur la trajectoire de vol.

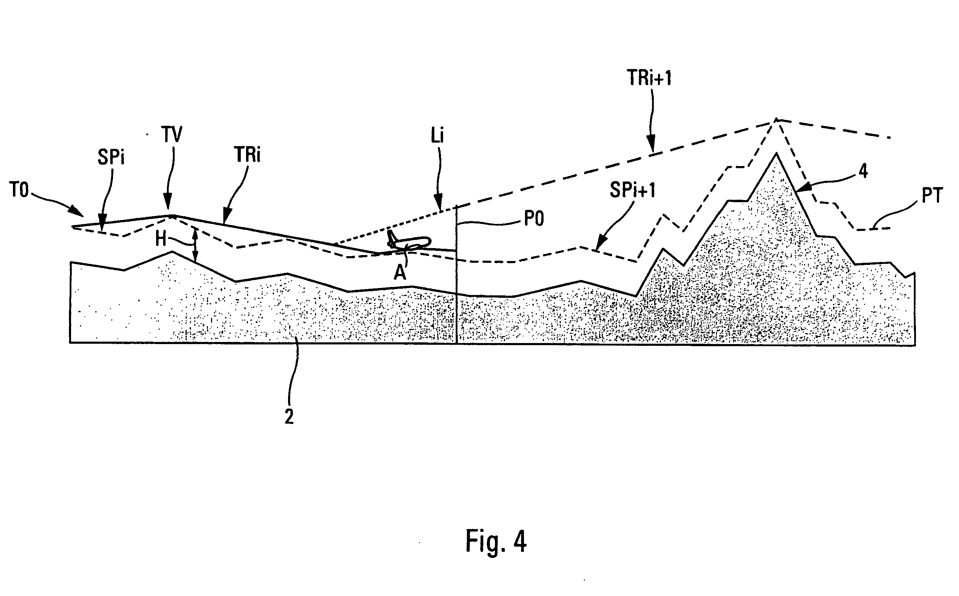

Ledit moyen 7 du dispositif 1 conforme à l'invention comporte, de plus, un élément 22, qui est relié par une liaison 23 à l'élément 15, pour déterminer une trajectoire de transition Li entre deux tronçons TRi et TRi+1 1 de trajectoire verticale TV successifs. Cette trajectoire de transition Li permet de voler d'un tronçon TRi quelconque vers le tronçon TRi + 1 immédiatement suivant, comme représenté sur la figure 4 ou sur la figure 3 pour la trajectoire de transition L1 et les tronçons TR1 et TR2.

Ledit moyen 22 détermine ladite trajectoire de transition Li, en prolongeant le tronçon qui est situé le plus haut au plan de transition PO des deux tronçons TRi et TRi + 1 de trajectoire successifs. Il prolonge donc le tronçon concerné vers l'autre tronçon, et ceci jusqu'à la jonction avec cet autre tronçon. Ainsi :
- dans l'exemple de la figure 3, le moyen 22 prolonge le tronçon TR1 (en amont), puisqu'il est situé plus haut que le tronçon TR2 suivant, au niveau du plan de transition PO ; et
- dans l'exemple de la figure 4, ledit moyen 22 prolonge le tronçon TRi + 1 (en aval), puisque ce dernier est situé plus haut que le tronçon TRi précédent, au niveau dudit plan de transition PO.

Par ailleurs, le moyen 7 du dispositif 1 conforme à l'invention comporte de plus :
- un élément 24 qui est relié par une liaison 25 à l'élément 14 et qui est destiné à vérifier si chaque section de profil SPi qui est extraite par cet élément 14 est compatible avec des performances de montée maximales de l'aéronef A, issues de ladite base de données 17 ; et
- un élément 26 qui est relié par des liaisons 27 et 28 auxdits éléments 24 et 15, pour corriger chaque section de profil SPi, pour laquelle une incompatibilité a été détectée par ledit élément 24, et ceci de la manière précisée ci-dessous.

Chaque section de profil SPi corrigée par l'élément 26 est ensuite utilisée par l'élément 15, au lieu de la section de profil non corrigée issue de l'élément 14, pour déterminer le tronçon TRi de trajectoire verticale TV correspondant.

Ainsi, le dispositif 1 conforme à l'invention est en mesure d'anticiper toute configuration de terrain critique (excepté une falaise devant l'aéronef) qui pourrait être rencontrée à la fin du calcul de chaque tronçon TRi de trajectoire verticale. Plus précisément, on dispose ainsi, avant la détermination de chaque tronçon TRi, d'une information concernant la possibilité de voler sur le tronçon TRi + 1 suivant en fonction de la section de profil SPi+1 correspondante, et dans le cas où il est nécessaire d'anticiper une montée, cette situation est prise en compte par la section de profil SPi corrigée.

Pour ce faire, ledit élément 24 utilise une courbe de garde 29 qui est représentative des performances courantes de montée maximale de l'aéronef A. Ces performances sont calculées de façon usuelle à la vitesse de consigne de l'aéronef A ou à la vitesse qui donne la pente maximale si la courbe de garde calculée à la vitesse courante détecte une impossibilité de montée. Dans ce cas, l'aéronef A monte et quitte le vol à basse altitude (une alarme est alors signalée au pilote).

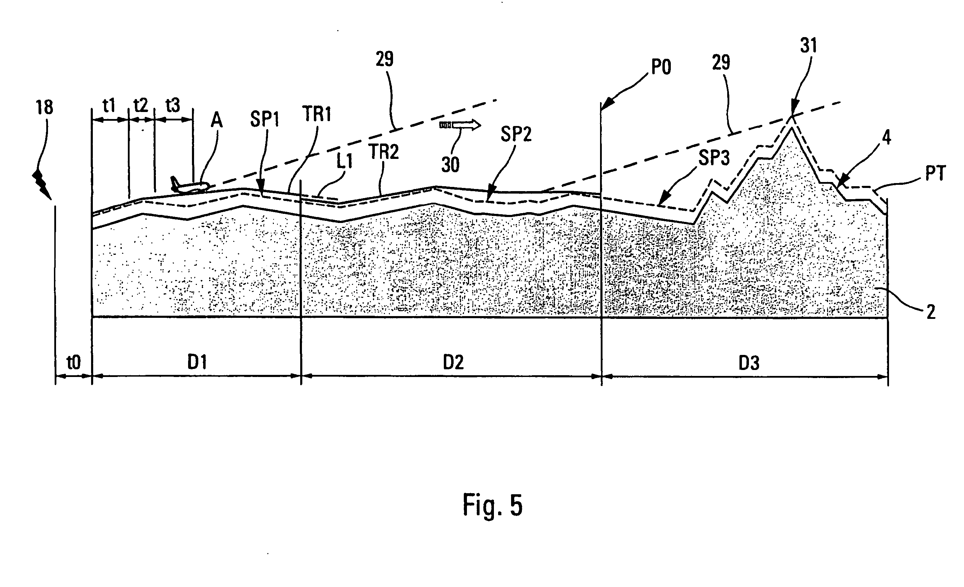

Ladite courbe de garde 29 consiste en un segment de montée qui prend appui sur le profil de terrain considéré. Cette courbe de garde 29 balaie alors le profil de terrain et ceci pour chaque tronçon de trajectoire verticale, comme illustré par une flèche 30 sur les figures 2 et 5. Le balayage commence (devant l'aéronef) au début de la première section de profil SP1 qui est extraite pour construire le premier tronçon TR1 de trajectoire verticale TV. Ce segment de montée 29 ne doit pas intercepter le profil de terrain, au niveau du tronçon de trajectoire verticale considéré ou au niveau du tronçon suivant (si le profil de terrain correspondant est déjà extrait).

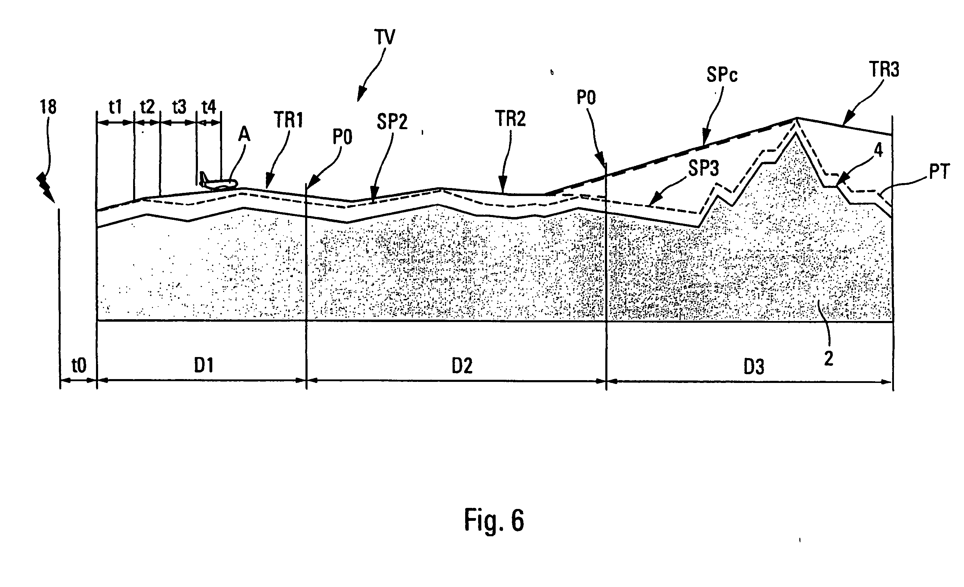

Selon l'invention, le calcul d'un tronçon TRi de trajectoire verticale part de la crête la plus haute sur la section considérée (de distance respective D1, D2, D3 sur les figures 5 et 6) de manière à garantir le passage de cette crête.

De plus, selon l'invention, on s'assure le plus rapidement possible qu'un tronçon est volable. Il faut donc le faire avant de calculer la trajectoire verticale correspondant à ce tronçon de terrain. Comme le calcul de cette trajectoire est un calcul optimisé, il prend du temps. Donc avant cela, on balaie le profil de terrain avec la courbe de garde 29 qui représente les performances de montée maximales. Comme la montée peut alors être anticipée, le balayage commence à partir de la position courante de l'aéronef A.

Dans l'exemple de la figure 5, après l'extraction de la section de profil SP3, la courbe de garde 29 intercepte la section de profil SP3 suivante en un point 31. Cette situation rend nécessaire de corriger en partie les sections de profil SP2 et SP3, et de les remplacer par une section de profil corrigée SPc, comme représenté sur la figure 6. La trajectoire verticale TV correspondante sera alors construite à partir de cette section de profil corrigée SPc.

Dans l'exemple de la figure 6 :
- la durée t1 correspond à la durée d'extraction de la section de profil SP2 (car l'aéronef A se trouve déjà sur le tronçon TR1) ;
- la durée t2 correspond à la durée de calcul du tronçon TR2 ;
- la durée t3 correspond à la durée d'extraction de la section de profil SP3 ; et
- la durée t4 correspond à la durée de calcul du tronçon TR3.

## Revendications

1. Procédé pour construire une trajectoire de vol (T0 à basse altitude destinée à être suivie par un aéronef (A), en particulier un avion de transport militaire, ladite trajectoire de vol (T0) comprenant une trajectoire latérale et une trajectoire verticale (TV), ladite trajectoire verticale (TV) étant déterminée à l'aide d'un profil de terrain (PT) relatif à un terrain (2) à survoler par l'aéronef (A) de manière à permettre audit aéronef (A) de suivre ledit terrain (2) survolé, procédé selon lequel on détermine ladite trajectoire verticale (TV) de la trajectoire de vol (T0), lors d'un vol de l'aéronef (A), de façon successive au fur et à mesure du vol, et ceci tronçon (TRi) par tronçon (TRi), et pour chaque tronçon (TRi) de trajectoire verticale (TV) :
- à l'aide d'un premier élément (14), on extrait d'une base de données du terrain (3) contenant ledit profil de terrain (PT) une section de profil (SPi) qui est relative au terrain (2) à survoler selon la trajectoire latérale correspondante ; et
- à l'aide d'un deuxième élément (15), on détermine ledit tronçon (TRi) de trajectoire verticale (TV), à l'aide de ladite section de profil (SPi) ainsi extraite, en fonction de performances de montée et de descente de l'aéronef (A),
**caractérisé en ce que** l'on vérifie si chaque section de profil (SPi) extraite de ladite base de données (3) par ledit premier élément (14) est compatible avec des performances courantes de montée maximale de l'aéronef (A), et lorsque l'on détecte une incompatibilité, on corrige la section de profil (SPi) correspondante pour lever cette incompatibilité, la section de profil ainsi corrigée étant utilisée par ledit deuxième élément (15) pour déterminer le tronçon (TRi) de trajectoire verticale correspondant, et **en ce que**, pour vérifier si chaque section de profil (SPi) extraite de la base de données (3) est compatible avec des performances courantes de montée maximale de l'aéronef (A) :
- on utilise une courbe de garde (29) qui est représentative des performances courantes de montée maximale de l'aéronef (A), ladite courbe de garde (29) consistant en un segment de montée qui prend appui sur le profil de terrain (PT) considéré ;
- on balaie ladite courbe de garde (29) sur le profil de terrain (PT) pour chaque tronçon (TRi) de trajectoire verticale (TV), le balayage commençant au début de la première section de profil (PT1) ; et
- on vérifie, au cours de ce balayage, si ladite courbe de garde (29) intercepte le profil de terrain,
et **en ce qu'**à une durée prédéterminée (tO), après une demande de construction d'une trajectoire de vol (T0), qui est compatible avec le besoin opérationnel et les configurations du relief que l'on doit rencontrer sur la trajectoire de vol, on fournit un premier tronçon (TR1) de trajectoire verticale (TV), pendant que l'on détermine un second tronçon (TR2), et ainsi de suite.

2. Procédé selon la revendication 1,
**caractérisé en ce que**, pour déterminer ladite trajectoire verticale (TV), on détermine de plus une trajectoire de transition (Li) entre, à chaque fois, deux tronçons (TRi, TRi + 1) de trajectoire verticale successifs, ladite trajectoire de transition (Li) permettant de voler d'un tronçon (TRi) vers l'autre tronçon (TRi+1).

3. Procédé selon la revendication 2,
**caractérisé en ce que** l'on détermine ladite trajectoire de transition (Li), en prolongeant le tronçon, qui est situé le plus haut à un plan de transition (PO) des deux tronçons (TRi, TRi + 1) de trajectoire verticale successifs, vers l'autre tronçon, et ceci jusqu'à la jonction avec ce dernier.

4. Procédé selon l'une quelconque des revendications précédentes,
**caractérisé en ce que** le calcul d'un tronçon (TRi) de trajectoire verticale (TV) part de la crête la plus haute sur la section considérée de manière à garantir le passage de cette crête.

5. Procédé selon l'une quelconque des revendications 1 à 4,
**caractérisé en ce que** ladite trajectoire latérale est conforme à un plan de vol fourni par un pilote de l'aéronef (A).

6. Procédé selon l'une quelconque des revendications 1 à 4,
**caractérisé en ce que** ladite trajectoire latérale est déterminée par un autorouteur de l'aéronef (A).

7. Dispositif pour construire une trajectoire de vol (T0) à basse altitude destinée à être suivie par un aéronef (A), en particulier un avion de transport militaire, ladite trajectoire de vol (T0) comprenant une trajectoire latérale et une trajectoire verticale (TV), ledit dispositif (1) comportant :
- une base de données (3) contenant un profil de terrain (PT) relatif à un terrain (2) à survoler par l'aéronef (A) ;
- un ensemble (5) de sources d'informations, susceptibles d'engendrer au moins des informations relatives à l'aéronef (A) ;
- un premier moyen (6) pour déterminer ladite trajectoire latérale de la trajectoire de vol (T0) ; et
- un deuxième moyen (7) pour déterminer ladite trajectoire verticale (TV) de la trajectoire de vol (T0), ledit deuxième moyen (7) étant formé de manière à déterminer ladite trajectoire verticale (TV), lors d'un vol de l'aéronef (A), de façon successive au fur et à mesure du vol, et ceci tronçon (TRi) par tronçon (TRi), ledit deuxième moyen (7) comportant au moins :
• un premier élément (14) pour extraire de ladite base de données (3), au moins une section de profil (SPi) qui est relative au terrain (2) à survoler selon la trajectoire latérale correspondante ; et
• un deuxième élément (15) pour déterminer un tronçon (TRi) de trajectoire verticale, à l'aide de ladite section de profil (SPi) extraite par ledit premier élément (14), en fonction de performances de montée et de descente de l'aéronef (A),
**caractérisé en ce que** :
- ledit deuxième moyen (7) comporte, de plus :
• un quatrième élément (24) pour vérifier si chaque section de profil (SPi) qui est extraite par ledit premier élément (14) est compatible avec des performances de montée maximale de l'aéronef (A), ledit quatrième élément (24) comprenant des moyens pour :
· utiliser une courbe de garde (29) qui est représentative des performances courantes de montée maximale de l'aéronef (A), ladite courbe de garde (29) consistant en un segment de montée qui prend appui sur le profil de terrain (PT) considéré ;
. balayer ladite courbe de garde (29) sur le profil de terrain (PT) pour chaque tronçon (TRi) de trajectoire verticale (TV), le balayage, commençant au début de la première section de profil (PT1) ; et
. vérifier, au cours de ce balayage, si ladite courbe de garde (29) intercepte le profil de terrain ; et
• un cinquième élément (26) pour corriger chaque section de profil (SPi), pour laquelle une incompatibilité est détectée par ledit quatrième élément (24), chaque section de profil ainsi corrigée étant utilisée par ledit deuxième élément (15) pour déterminer le tronçon (TRi) de trajectoire verticale correspondant ; et
- ledit dispositif (1) est formé de manière à fournir, à une durée prédéterminée (t0) après une demande de construction d'une trajectoire de vol (T0), qui est compatible avec le besoin opérationnel et les configurations du relief que l'on doit rencontrer sur la trajectoire de vol, un premier tronçon (TR1) de trajectoire verticale (TV), pendant qu'il détermine un second tronçon (TR2), et ainsi de suite.

8. Dispositif selon la revendication 7,
**caractérisé en ce que** ledit deuxième moyen (7) comporte, de plus, un troisième élément (22) pour déterminer une trajectoire de transition (Li) entre deux tronçons (TRi, TRi + 1) de trajectoire verticale successifs, ladite trajectoire de transition (Li) permettant de voler d'un tronçon vers l'autre tronçon.

9. Dispositif selon l'une des revendications 7 et 8,
**caractérisé en ce que** ledit ensemble (15) de sources d'informations comporte au moins une base de données (17) contenant des informations relatives à des performances de montée et de descente de l'aéronef (A).

10. Aéronef,
**caractérisé en ce qu'**il comporte un dispositif (1) tel que celui spécifié sous l'une quelconque des revendications 7 à 9.

## Claims

1. A method for constructing a low-altitude flight trajectory (TO) to be followed by an aircraft (A), in particular a military transport plane, said flight trajectory (TO) comprising a lateral trajectory and a vertical trajectory (TV), said vertical trajectory (TV) being determined with the aid of a terrain profile (PT) relating to a terrain (2) to be overflown by the aircraft (A) in such a way as to allow said aircraft (A) to follow said overflown terrain (2), according to which method, said vertical trajectory (TV) of the flight trajectory (TO) is determined, during a flight of the aircraft (A), in a successive manner in tandem with the flight, doing so stretch (TRi) by stretch (TRi), and for each stretch (TRi) of vertical trajectory (TV):
- with the aid of a first element (14), a section of profile (SPi) which pertains to the terrain (2) to be overflown according to the corresponding lateral trajectory is extracted from a terrain database (3) containing said terrain profile (PT); and
- with the aid of a second element (15), said stretch (TRi) of vertical trajectory (TV) is determined with the aid of said profile section (SPi) thus extracted, as a function of climb and descent performance of the aircraft (A), **characterized in that** a check is made to verify whether each profile section (SPi) extracted from said database (3) by said first element (14) is compatible with maximum rise performance of the aircraft (A), and when an incompatibility is detected, the corresponding profile section (SPi) is corrected so as to remove this incompatibility, the profile section thus corrected being used to determine the corresponding stretch (TRi) of vertical trajectory,
and **in that**, for verifying whether each profile section (SPi) extracted from said database (3) is compatible with maximum rise performance of the aircraft (A) :
- a guard curve (29) which is representative of the current maximum climb performance of the aircraft (A) is used, said guard curve (29) consisting of a climb segment which rests on the terrain profile (PT) considered ;
- said curve (29) then sweeps the terrain profile doing so for each stretch (Tri) of vertical trajectory (TV), the sweep commencing at the start of the first profile section ; and
- a check is made to verify whether the guard curve (29) intercepts the terrain profile,
and **in that** at a predetermined duration (tO), after a request for a construction of a flight trajectory (TO), which is compatible with the operational requirement and the configurations of the relief that must be encountered over the flight trajectory, a first stretch (TR1) of the flight trajectory is provided, while a second stretch (TR2) is determined, and so on and so forth.

2. The method as claimed in claim 1,
**characterized in that**, to determine said vertical trajectory (TV), a transition trajectory (Li) between, each time, two successive stretches (TRi, TRi + 1) of vertical trajectory is moreover determined, said transition trajectory (Li) making it possible to fly from one stretch (TRi) to the other stretch (TRi + 1).

3. The method as claimed in claim 2,
**characterized in that** said transition trajectory (Li) is determined by extending the stretch, which is situated highest at a plane of transition (PO) of the two successive stretches (TRi, TRi + 1) of vertical trajectory, towards the other stretch, doing so until joining with the latter.

4. The method as claimed in any one of the precedent claims,
**characterized in that** the computation of a stretch (Tri) of vertical trajectory (TV) starts from the highest summit over the section considered in such a way as to guarantee the passing of this summit.

5. The method as claimed in one of claims 1 to 4,
**characterized in that** said lateral trajectory complies with a flight plan provided by a pilot of the aircraft (A).

6. The method as claimed in one of claims 1 to 4,
**characterized in that** said lateral trajectory is determined by an auto-router of the aircraft (A).

7. A device for constructing a low-altitude flight trajectory (TO) to be followed by an aircraft (A), in particular a military transport plane, said flight trajectory (TO) comprising a lateral trajectory and a vertical trajectory (TV), said device (1) comprising:
- a database (3) containing a terrain profile (PT) pertaining to a terrain (2) to be overflown by the aircraft (A);
- a set (5) of information sources, able to produce at least information pertaining to the aircraft (A);
- a first means (6) for determining said lateral trajectory of the flight trajectory (TO); and
- a second means (7) for determining said vertical trajectory (TV) of the flight trajectory (TO), wherein said second means (7) is formed in such a way as to determine said vertical trajectory (TV), during a flight of the aircraft (A), in a successive manner in tandem with the flight, doing so stretch (TRi) by stretch (TRi), said second means (7) comprising at least:
• a first element (14) for extracting from said database (3), at least one profile section (SPi) which pertains to the terrain (2) to be overflown according to the corresponding lateral trajectory, said first element (14) comprising means for :
■ using a guard curve (29) which is representative of the current maximum climb performance of the aircraft (A), said guard curve (29) consisting of a climb segment which rests on the terrain profile (PT) considered ;
■ sweeping said curve (29) on the terrain profile doing so for each stretch (Tri) of vertical trajectory (TV), the sweep commencing at the start of the first profile section ; and
■ making a check to verify whether the guard curve (29) intercepts the terrain profile ; and
• a second element (15) for determining a stretch (TRi) of vertical trajectory, with the aid of said profile section (SPi) extracted by said first element (14), as a function of climb and descent performance of the aircraft (A), **characterized in that** :
- said second means (7) furthermore comprises:
• a fourth element (24) for verifying whether each profile section (SPi) which is extracted by said first element (14) is compatible with maximum climb performance of the aircraft (A); and
• a fifth element (26) for correcting each profile section (SPi), for which an incompatibility is detected by said fourth element (24), each profile section thus corrected being used by said second element (15) to determine the corresponding stretch (TRi) of vertical trajectory ; and
- said device (1) is formed to provide, at a predetermined duration (tO), after a request for a construction of a flight trajectory (TO), which is compatible with the operational requirement and the configurations of the relief that must be encountered over the flight trajectory, a first stretch (TR1) of the flight trajectory, while a second stretch (TR2) is determined, and so on and so forth.

8. The device as claimed in claim 7,
**characterized in that** said second means (7) furthermore comprises a third element (22) for determining a trajectory of transition (Li) between two successive stretches (TRi, TRi + 1) of vertical trajectory, said transition trajectory (Li) making it possible to fly from one stretch to the other stretch.

9. The device as claimed in one of claims 7 and 8,
**characterized in that** said set (15) of information sources comprises at least one database (17) containing information pertaining to climb and descent performance of the aircraft (A).

10. An aircraft,
**characterized in that** it comprises a device (1) such as that specified under any one of claims 7 to 9.

## Patentansprüche

1. Verfahren zum Konstruieren einer Flugbahn (T0) auf niedriger Höhe, die dazu gedacht ist, von einem Luftfahrzeug (A), insbesondere von einem Militärtransportflugzeug, befolgt zu werden, wobei die Flugbahn (T0) eine seitliche Bahn und eine senkrechte Bahn (TV) umfasst, wobei die senkrechte Bahn (TV) anhand eines Bodenprofils (PT) bezüglich eines von dem Luftfahrzeug (A) zu überfliegenden Bodens (2) bestimmt wird, um es dem Luftfahrzeug (A) zu ermöglichen, den überflogenen Boden (2) zu verfolgen, wobei bei dem Verfahren bei einem Flug des Luftfahrzeugs (A) die senkrechte Bahn (TV) der Flugbahn (T0) nacheinander im Verlauf des Flugs bestimmt wird, und zwar Teilabschnitt (TRi) für Teilabschnitt (TRi), und für jeden Teilabschnitt (TRi) der senkrechten Bahn (TV):
- wird anhand eines ersten Elements (14) aus einer Datenbank des Bodens (3), die das Bodenprofil (PT) enthält, ein Profilabschnitt (SPi) abgerufen, der sich auf den zu überfliegenden Boden (2) gemäß der entsprechenden seitlichen Bahn bezieht; und
- wird anhand eines zweiten Elements (15) der Teilabschnitt (TRi) der senkrechten Bahn (TV) bestimmt, anhand des so abgerufenen Profilabschnitts (SPi), in Abhängigkeit von Steigflug- und Sinkflug-Leistungen des Luftfahrzeugs (A),
**dadurch gekennzeichnet, dass** überprüft wird, ob jeder aus der Datenbank (3) durch das erste Element (14) abgerufene Profilabschnitt (SPi) mit den üblichen Steigflug-Höchstleistungen des Luftfahrzeugs (A) kompatibel ist, und wenn eine Inkompatibilität erfasst wird, der entsprechende Profilabschnitt (SPi) korrigiert wird, um diese Inkompatibilität zu beheben, wobei der somit korrigierte Profilabschnitt von dem zweiten Element (15) verwendet wird, um den Teilabschnitt (TRi) der entsprechenden senkrechten Bahn zu bestimmen, und dass, um zu überprüfen, ob jeder aus der Datenbank (3) abgerufene Profilabschnitt (SPi) mit den üblichen Steigflug-Höchstleistungen des Luftfahrzeugs (A) kompatibel ist:
- eine Schutzkurve (29) verwendet wird, welche die üblichen Steigflug-Höchstleistungen des Luftfahrzeugs (A) darstellt, wobei die Schutzkurve (29) aus einem Steigflugsegment besteht, das auf dem betreffenden Bodenprofil (PT) beruht;
- die Schutzkurve (29) auf dem Bodenprofil (PT) für jeden Teilabschnitt (TRi) der senkrechte Bahn (TV) abgetastet wird, wobei die Abtastung am Anfang des ersten Profilabschnitts (PT1) beginnt; und
- während dieser Abtastung überprüft wird, ob die Schutzkurve (29) das Bodenprofil kreuzt,
und dass bei einer vorherbestimmten Dauer (t0) nach einer Anfrage zur Konstruktion einer Flugbahn (T0), die mit den Betriebsanforderungen und den Konfigurationen des Reliefs, das auf der Flugbahn vorzutreffen ist, kompatibel ist, ein erster Teilabschnitt (TR1) einer senkrechten Bahn (TV) bereitgestellt wird, während ein zweiter Teilabschnitt (TR2) bestimmt wird, und so weiter.

2. Verfahren nach Anspruch 1, **dadurch gekennzeichnet, dass** zum Bestimmen der senkrechten Bahn (TV) zudem eine Übergangsbahn (Li) zwischen jeweils zwei aufeinanderfolgenden Teilabschnitten (TRi, TRi + 1) der senkrechten Bahn bestimmt wird, wobei es die Übergangsbahn (Li) ermöglicht, von einem Teilabschnitt (TRi) zum anderen Teilabschnitt (TRi + 1) zu fliegen.

3. Verfahren nach Anspruch 2, **dadurch gekennzeichnet, dass** die Übergangsbahn (Li) **dadurch** bestimmt wird, dass der Teilabschnitt, der sich am höchsten auf einer Übergangsebene (P0) der beiden aufeinanderfolgenden Teilabschnitte (TRI, TRi + 1) der senkrechten Bahn befindet, bis zu dem anderen Teilabschnitt verlängert wird, und zwar bis zum Verbindungspunkt mit diesem.

4. Verfahren nach einem der vorhergehenden Ansprüche, **dadurch gekennzeichnet, dass** die Berechnung eines Teilabschnitts (TRi) der senkrechten Bahn (TV) von dem höchsten Gipfel auf dem betreffenden Abschnitt ausgeht, um den Überflug dieses Gipfels zu gewährleisten.

5. Verfahren nach einem der Ansprüche 1 bis 4, **dadurch gekennzeichnet, dass** die seitliche Bahn einem Flugplan entspricht, der von einem Piloten des Luftfahrzeugs (A) bereitgestellt wird.

6. Verfahren nach einem der Ansprüche 1 bis 4, **dadurch gekennzeichnet, dass** die seitliche Bahn von einem Auto-Router des Luftfahrzeugs (A) bestimmt wird.

7. Vorrichtung zum Konstruieren einer Flugbahn (T0) auf niedriger Höhe, die dazu gedacht ist, von einem Luftfahrzeug (A), insbesondere einem Militärtransportflugzeug, befolgt zu werden, wobei die Flugbahn (T0) eine seitliche Bahn und eine senkrechte Bahn (TV) umfasst, wobei die Vorrichtung (1) Folgendes umfasst:
- eine Datenbank (3), die ein Bodenprofil (PT) bezüglich eines von dem Luftfahrzeug (A) zu überfliegenden Bodens (2) enthält;
- eine Anordnung (5) von Informationsquellen, die in der Lage sind, mindestens Informationen bezüglich des Luftfahrzeugs (A) zu erzeugen;
- ein erstes Mittel (6) zum Bestimmen der seitlichen Bahn der Flugbahn (T0); und
- ein zweites Mittel (7) zum Bestimmen der senkrechten Bahn (TV) der Flugbahn (T0), wobei das zweite Mittel (7) derart gebildet ist, dass es die senkrechte Bahn (TV) bei einem Flug des Luftfahrzeugs (A) nacheinander im Verlauf des Flugs bestimmt, und zwar Teilabschnitt (TRi) für Teilabschnitt (TRi), wobei das zweite Mittel (7) mindestens Folgendes umfasst:
• ein erstes Element (14), um aus der Datenbank (3) mindestens einen Profilabschnitt (SPi) abzurufen, der sich auf den zu überfliegenden Boden (2) gemäß der entsprechenden seitlichen Bahn bezieht; und
• ein zweites Element (15), um einen Teilabschnitt (TRi) der senkrechten Bahn zu bestimmen, anhand des von dem ersten Element (14) abgerufenen Profilabschnitts (SPi), in Abhängigkeit von Steigflug- und Sinkflug-Leistungen des Luftfahrzeugs (A),
**dadurch gekennzeichnet, dass**:
- das zweite Mittel (7) zudem Folgendes umfasst:
• ein viertes Element (24), um zu überprüfen, ob jeder Profilabschnitt (SPi), der von dem ersten Element (14) abgerufen wird, mit Steigflug-Höchstleistungen des Luftfahrzeugs (A) kompatibel ist, wobei das vierte Element (24) Mittel für folgende Schritte umfasst:
• Verwenden einer Schutzkurve (29), die für die üblichen Steigflug-Höchstleistungen des Luftfahrzeugs (A) repräsentativ ist, wobei die Schutzkurve (29) aus einem Steigflugsegment besteht, das auf dem betreffenden Bodenprofil (PT) beruht;
• Abtasten der Schutzkurve (29) auf dem Bodenprofil (PT) für jeden Teilabschnitt (TRi) der senkrechten Bahn (TV), wobei die Abtastung am Anfang des ersten Profilabschnitts (PT1) beginnt; und
• Überprüfen während dieser Abtastung, ob die Schutzkurve (29) das Bodenprofil kreuzt; und
• ein fünftes Element (26), um jeden Profilabschnitt (SPi) zu korrigieren, für den eine Inkompatibilität durch das vierte Element (24) erfasst wird, wobei jeder somit korrigierte Profilabschnitt von dem zweiten Element (15) verwendet wird, um den entsprechenden Teilabschnitt (TRi) der senkrechten Bahn zu bestimmen; und
- die Vorrichtung (1) derart gebildet ist, dass sie bei einer vorherbestimmten Dauer (t0) nach einer Anfrage zur Konstruktion einer Flugbahn (T0), die mit den Betriebsanforderungen und den Konfigurationen des Reliefs, das auf der Flugbahn vorzufinden ist, kompatibel ist, einen ersten Teilabschnitt (TR1) der senkrechten Bahn (TV) bereitstellt, während sie einen Teilabschnitt (TR2) bestimmt, und so weiter.

8. Vorrichtung nach Anspruch 7, **dadurch gekennzeichnet, dass** das zweite Mittel (7) zudem ein drittes Element (22) umfasst, um eine Übergangsbahn (Li) zwischen zwei aufeinanderfolgenden Teilabschnitten (TRi, TRi + 1) der senkrechten Bahn umfasst, wobei es die Übergangsbahn (Li) ermöglicht, von einem Teilabschnitt zum anderen Teilabschnitt zu fliegen.

9. Vorrichtung nach einem der Ansprüche 7 und 8, **dadurch gekennzeichnet, dass** die Anordnung (15) von Informationsquellen mindestens eine Datenbank (17) umfasst, die Informationen bezüglich der Steigflug- und Sinkflug-Leistungen des Luftfahrzeugs (A) enthält.

10. Luftfahrzeug, **dadurch gekennzeichnet, dass** es eine Vorrichtung (1) nach einem der Ansprüche 7 bis 9 umfasst.
